# EUROPÄISCHE PATENTSCHRIFT

(11) **EP 3 859 207 B1**
(45) Veröffentlichungstag und Bekanntmachung des Hinweises auf die Patenterteilung: **18.06.2025**
(21) Anmeldenummer: 20154345.1
(22) Anmeldetag: 29.01.2020
(51) Int. Cl.: F23G 5/00, F23G 5/04, F23G 5/46, F23G 7/00, F23L 15/00, F23L 15/02, F01K 3/22

(54) **VERBRENNUNGSANLAGE MIT WÄRMESPEICHER**
COMBUSTION INSTALLATION WITH HEAT ACCUMULATOR
INSTALLATION DE COMBUSTION POURVUE D'ACCUMULATEUR DE CHALEUR

(43) Veröffentlichungstag der Anmeldung: 04.08.2021
(73) Patentinhaber: Steinmüller Engineering GmbH, 51643 Gummersbach (DE)
(72) Erfinder: TRAUTNER, Jürgen, 51643 Gummersbach (DE); HAMEL, Stefan, 51643 Gummersbach (DE)
(74) Vertreter: Godemeyer Blum Lenze Patentanwälte Partnerschaft mbB - werkpatent

(56) Entgegenhaltungen:
- WO-A1-02/097328
- WO-A1-2013/037561
- WO-A1-2016/124709

## Beschreibung

Die Erfindung betrifft eine Verbrennungsanlage zur Verbrennung von flüssigen, festen oder gasförmigen Brennstoffen, enthaltend einen Feuerraum mit Brennstoffzufuhr und Verbrennungsluftzufuhr, einen Rauchgasweg und einen thermischen Speicher.

### Hintergrund der Erfindung

In der Industrie werden vermehrt Anlagen und Verfahren dahingehend angepasst, dass CO₂-Emissionen verringert werden bzw. regenerative Energien genutzt werden.

So liegt der WO 2013/037561 A1 die Aufgabe zugrunde, eine Lösung zu schaffen, die es ermöglicht, den Betrieb eines Kohlekraftwerks zu flexibilisieren und bei betriebsbereit gehaltenem Kohlekraftwerk den Nettowirkungsgrad zu erhöhen. Die WO 2013/037561 betrifft daher ein Verfahren wobei die Feuerungsanlage temporär während ihrer Betriebszeit in einem Stand-By-Modus betrieben wird, in welchem sie in einem Mindestlastbereich oder Minimallastbereich des Dampferzeugers betrieben wird und dabei erzeugte, nicht in das ans Kraftwerk angeschlossene Stromnetz eingespeiste oder einzuspeisende Energie zur Aufbereitung von für den Betrieb des Kraftwerks benötigten Roh- oder Betriebsstoffen, insbesondere zum Betrieb der mindestens einen Kohlemühle, verwendet und/oder in mindestens einer, vorzugsweise ins Kraftwerk integrierten, Anlage gespeichert und/oder im Rahmen einer Kraft-Wärme-Kopplung genutzt wird.

Die WO 2016/124709 A1 offenbart ein Solarkraftwerk mit einem ersten Wärmeträgerkreislauf und einem zweiten Wärmeträgerkreislauf, bei dem der erste Wärmeträgerkreislauf einen Speicher für heißes Wärmeträgermedium und einen Speicher für kaltes Wärmeträgermedium sowie ein die Speicher für heißes Wärmeträgermedium und kaltes Wärmeträgermedium verbindendes und durch ein Solarfeld führendes Rohrleitungssystem umfasst und der zweite Wärmeträgerkreislauf ein die Speicher für heißes Wärmeträgermedium und kaltes Wärmeträgermedium verbindendes Rohrleitungssystem umfasst, in dem mindestens ein Wärmeübertrager zum Verdampfen und Überhitzen von Wasser aufgenommen ist, wobei der Wärmeübertrager einen vom Wärmeträgermedium durchströmten Bereich und einen von Wasser durchströmten Bereich aufweist, die durch eine wärmeleitende Wandung getrennt sind, so dass Wärme vom Wärmeträgermedium an das Wasser übertragen werden kann.

Das in WO 02/097328 A1 offenbarte regenerative thermische Abfallverbrennungssystem weist eine sehr hohe Wärmerückgewinnungseffizienz auf, durch direktes Erhitzen keramischer Packungsmaterialien unter Verwendung von Hochtemperatur-Abgas, Inkontaktbringen von Raumtemperatur-Luft mit Hochtemperatur-Luft, um so Wärme zu regenerieren, und dann Trocknen und Verbrennen des Abfalls mit einem hohen Feuchtigkeitsgehalt unter Verwendung der Hochtemperaturluft. Daher können zusätzliche Brennstoffkosten, die zum Verbrennen des Abfalls mit einem hohen Feuchtigkeitsgehalt erforderlich sind, merklich reduziert werden.

In der Industrie sind nasse Stoffe mit einem hohen organischen Anteil häufig vorkommende Produkte oder Nebenprodukte von Prozessen. Ziel ist es, diese Stoffe zu entsorgen, energetisch zu nutzen oder zumindest die Menge an zu entsorgendem Stoff zu minimieren. Dies ist insbesondere bei Klärschlämmen der Fall. Klärschlamm wird aufgrund von gesetzlichen Vorgaben zunehmend einer Verbrennung zugeführt. Die Verbrennung erfolgt nach dem Stand der Technik in Großanlagen. Dabei sind auch kleinere und mittlere Klärschlammverbrennungen technisch realisierbar.

Der organische Feststoffanteil des Klärschlamms muss zunächst getrocknet werden, um verbrannt werden zu können. Bei Klärschlamm ist eine mechanische Entwässerung bis maximal zu einem Trockensubstanzgehalt von ca. 25% möglich. Um eine selbstgängige oder auch autotherme Verbrennung des Klärschlamms in einem weitestgehend adiabaten Reaktor (d.h. einem Reaktor mit keinem oder nur geringem Wärmeverlust) aufrecht zu erhalten, ist typischerweise ein Trockensubstanzgehalt von mindestens 45 Gew.-% erforderlich. Bei einem Trockensubstanzgehalt von weniger als 45 Gew.-% ist auch eine Verbrennung möglich, die dann jedoch mit zusätzlicher Hilfsenergie (Stützfeuerung) erfolgen muss, wobei ggf. teure Primärbrennstoffe zugeführt werden müssen.

Bei der Verbrennung von Klärschlamm werden Verbrennungsanlagen eingesetzt, denen der Klärschlamm in Bunkern zugeführt wird. Von dort wird der Klärschlamm über Trockner geleitet, um den Feuchtigkeitsgehalt unter eine Höchstgrenze senken zu können. Dieser getrocknete Klärschlamm wird nachfolgend in Verbrennungsöfen verbrannt. Häufig werden zur Verbrennung von Klärschlamm Wirbelschichtöfen eingesetzt, aber auch andere Feuerungsverfahren nach dem Stand der Technik kommen zum Einsatz. In der Regel wird die Wärmeenergie des hierbei entstehenden heißen Rauchgases zur Trocknung des Klärschlammes eingesetzt.

Stand der Technik ist heute die Sammlung von allenfalls mechanisch entwässertem Klärschlamm aus einer Vielzahl von Kläranlagen zu einer großen, zentralen und stationären Verwertungsanlage als Monoverbrennung, in aller Regel mit einer Feuerungswärmeleistung von mehr als 20 MW, oder als Mitverbrennung in großen Kohlekraftwerken mit typisch 500-2.000 MW Feuerungswärmeleistung. Derartige Anlagen fassen Kläranlagen mehrerer Landkreise zusammen.

Nachteilig ist dabei, dass der Klärschlamm aufwändig und unter erheblichen Kosten für den Transport zu zentralen Verwertungsanlagen gebracht werden muss, wobei auch eine eventuelle Zwischenlagerung notwendig sein kann. Zudem genießen zentrale Großanlagen in der Bevölkerung eher wenig Akzeptanz.

Jüngste Änderungen der Klärschlammverordnung fordern eine Rückgewinnung des Phosphors aus Klärschlamm und parallel dazu soll die bodenbezogene Klärschlammverwertung deutlich eingeschränkt werden. Dies bedeutet einen deutlich erhöhten Aufwand für die Behandlung von Klärschlamm und somit eine große Kostenerhöhung für die Betreiber der Anlagen.

Aufgrund der genannten Nachteile ist eine Verbrennung in kleineren dezentralen Anlagen, die ggf. direkt auf dem Gelände der jeweiligen Kläranlage installiert sein kann, von Vorteil. Für den Betrieb von in der Regel kleineren dezentralen Anlagen zur Verbrennung, der Energiegewinnung oder der Entsorgung von Reststoffen ist oftmals eine diskontinuierliche Fahrweise gefordert, um Kosten insbesondere für Personal zu senken. So wird beispielsweise der Betrieb von Montag bis Freitag erwünscht, während über das Wochenende ein Stillstand oder vorteilhafterweise ein Warmhaltebetrieb erfolgen sollte. Der Warmhaltebetrieb ist jedoch bei Verwendung von Primärbrennstoffen kostspielig und aufgrund der Emission von fossilem CO₂ nicht erwünscht.

Die technische Aufgabe der vorliegenden Erfindung war es daher, eine Verbrennungsanlage und ein Verfahren bereitzustellen, die eine dezentrale Behandlung und/oder eine dezentrale Entsorgung von organischem Material, insbesondere solchem mit hohem Feuchtegehalt oder, von nassen Stoffen, wie etwa Klärschlamm, in kleineren Anlagen ermöglicht, eine diskontinuierliche Fahrweise erlaubt, die Nutzung von Hilfsenergien reduziert und die Anfahrzeit der Anlage verkürzt.

Die technische Aufgabe wird gelöst durch eine Verbrennungsanlage zur Verbrennung von flüssigen, festen oder gasförmigen Brennstoffen, enthaltend einen Feuerraum mit Brennstoffzufuhr und Verbrennungsluftzufuhr, einen Rauchgasweg und einen thermischen Speicher, wobei die Verbrennungsanlage eingerichtet ist in einem Betriebszustand, in dem die Verbrennung des Brennstoffes im Feuerraum stattfindet, mindestens einen Teil der Wärmeenergie des aus dem Feuerraum geführten Rauchgases bzw. Verbrennungsgases in den thermischen Speicher zu führen, und der thermische Speicher eingerichtet ist, die Wärmeenergie zu speichern,
wobei gemäß der Erfindung die Verbrennungsanlage weiterhin eingerichtet ist, in einem Betriebszustand, in dem die Verbrennung im Feuerraum abgeschaltet ist, d.h. keine Verbrennung im Feuerraum stattfindet, Wärmeenergie aus dem thermischen Speicher in den Feuerraum zu überführen, wobei der Eintritt der Wärmeenergie in den Feuerraum mittels eines gasförmigen Wärmeträgermediums, vorzugsweise Luft, erfolgt.

Die Überführung der Wärmeenergie aus dem thermischen Speicher dient dem Warmhaltebetrieb während des Zeitraums, in dem keine Verbrennung stattfindet, oder der Vorbereitung des Wiederanfahrens der Verbrennungsanlage, indem die Temperatur des Feuerraums nach dessen Abkühlen vor dem Neustart der Verbrennung erhöht bzw. auf ein gewünschtes Niveau gebracht wird. Gemäß der Erfindung tritt die Wärmeenergie in den Feuerraum mittels eines gasförmigen Wärmeträgermediums ein, vorzugsweise Luft. Dies bedeutet, dass die Wärmeenergie für den Warmhaltebetrieb des Feuerraums von außerhalb des Feuerraums, nämlich hier aus einem separaten thermischen Speicher, stammt und nicht ggf. die Wärmespeicherkapazität der Wände des Feuerraums verwendet wird.

Um eine diskontinuierliche Fahrweise der Verbrennungsanlage zu erlauben und gleichzeitig die Nutzung von Hilfsenergien wie Erdgas, Diesel, Leichtöl oder Strom für den Warmhaltebetrieb zu reduzieren und dabei die Anfahrzeit zu verkürzen, wird gemäß der vorliegenden Erfindung daher vorgeschlagen, einen thermischen Speicher während des regulären Betriebs der Verbrennungsanlage zu beladen. Dieser thermische Speicher wird dann insbesondere zur Warmhaltung während des Stopps der Verbrennung und/oder zum schnelleren Wiederanfahren der Verbrennungsanlage entladen. Die Vorteile der erfindungsgemäßen Vorrichtung sind daher die Verringerung der Mengen an benötigten Hilfsenergien und damit geringere Kosten und ein geringerer Ausstoß von CO₂, sowie ein schnelleres Wiederanfahren der Verbrennungsanlage. Weitere Vorteile ergeben sich durch die geringeren Temperaturschwankungen der Materialien der Komponenten (wie Feuerraum, Wärmetauscher, Luftvorwärmer, Rauchgasreinigungsanlage), woraus sich ein geringerer Verschleiß derselben und damit geringere Kosten ergeben. Die erfindungsgemäße Verbrennungsanlage eignet sich nicht nur zur Verbrennung von Klärschlamm, sondern ist für jeglichen Brennstoff geeignet. Die Verbrennungsanlage gemäß der vorliegenden Erfindung ist daher unabhängig vom verwendeten Brennstoff für einen diskontinuierlichen Betrieb und für einen Warmhaltebetrieb und/oder für ein schnelleres Wiederanfahren geeignet.

Die erfindungsgemäße Verbrennungsanlage ist vorzugsweise so ausgelegt, dass, in einem Betriebszustand, in dem die Verbrennung im Feuerraum abgeschaltet ist, Wärmeenergie über mindestens 1,0 Stunden, vorzugsweise mindestens 2,0 Stunden, weiter bevorzugt mindestens 3,0 Stunden, noch weiter bevorzugt mindestens 5,0 Stunden, besonders bevorzugt mindestens 10,0 Stunden, ganz besonders bevorzugt mindestens 20,0 Stunden, am meisten bevorzugt mindestens 50,0 Stunden aus dem thermischen Speicher in den Feuerraum und ggf. in weitere Komponenten der Anlage überführt werden kann.

Die erfindungsgemäße Verbrennungsanlage ist vorzugsweise so ausgelegt dass, wenn ein Zeitintervall, in dem die Verbrennung im Feuerraum abgeschaltet ist, 8,0 bis 100,0 Stunden beträgt, vorzugsweise 20,0 bis 80,0 Stunden, bevor die Verbrennung wieder startet, Wärmeenergie über das gesamte Zeitintervall, in dem die Verbrennung im Feuerraum abgeschaltet ist, oder einen Teil davon aus dem thermischen Speicher in den Feuerraum und ggf. in weitere Komponenten der Anlage überführt werden kann.

Besonders bevorzugt ist die Verbrennungsanlage so ausgelegt, dass Wärmeenergie über einen Teil des Zeitintervalls, in dem die Verbrennung im Feuerraum abgeschaltet ist, aus dem thermischen Speicher in den Feuerraum und ggf. in weitere Komponenten der Anlage überführt wird, um die Temperatur im Feuerraum zu erhöhen, damit zum Zeitpunkt des Neustarts der Verbrennung eine höhere Temperatur, vorzugsweise eine um mindestens 100°C höhere Temperatur, weiter bevorzugt eine um mindestens 200°C höhere Temperatur, noch weiter bevorzugt eine um mindestens 300°C höhere Temperatur im Feuerraum erreicht wird, als wenn dem Feuerraum diese Wärmeenergie nicht zugeführt würde. In dieser Konfiguration wird der Feuerraum nach einem eventuellen Abkühlen nach der Abschaltung vor dem Wiederanfahren (d.h. Start der Verbrennung) auf eine gewünschte höhere Temperatur gebracht.

Die genannten technischen Maßnahmen wie Warmhaltebetrieb und Aufwärmung der Anlage vor dem Wiederanfahren können so lange ohne Einsatz zusätzlicher Primärenergie eingesetzt werden, wie der jeweils konkret ausgelegte thermische Speicher eine ausreichende Wärmeenergie bereitstellen kann.

Die Anlagengröße orientiert sich im erfindungsgemäßen Verfahren an dem Bedarf des dezentralen Anfalls der nassen Einsatzstoffe, also z.B. an der Größe einer einzelnen Kläranlage. Eine Anlage mit 300 kW Feuerungswärmeleistung ist zum Beispiel für eine Kläranlage mit einem jährlichen Anfall von ca. 3.000 t mechanisch entwässertem Schlamm geeignet, das entspricht einer Gemeinde mit ca. 40.000 Einwohnern. Der Einsatz der erfindungsgemäßen Anlage spart die Kosten für Zwischenlagerung, Transport und Entsorgung. Dezentrale und kleinteilige Anlagen werden von der Bevölkerung eher akzeptiert als zentrale Großanlagen.

Für eine solche Anlage wäre beispielsweise ein entsprechend isolierter thermischer Speicher mit ca. 1-1,5 m³ geeignet, mit einer Partikelschüttung als Speichermedium gefüllt, beispielsweise bestehend aus Kies, Sand oder anderen hitzebeständigen Schüttgütern mit vorzugsweise hoher spezifischer Wärmekapazität, Wärmeenergie für den Warmhaltebetrieb und/oder zum Aufheizen des Feuerraums (auf ca. 400°C im Wirbelbett) für den Neustart für eine Verbrennungsanlage mit Wirbelschichtfeuerung für bis zu 55,0 Stunden bereitzustellen.

Wie oben erwähnt, ist der Feuerraum mit einer Brennstoffzufuhr sowie einer Verbrennungsluftzufuhr ausgestattet. Über die Brennstoffzufuhr wird der Hauptbrennstoff in den Feuerraum geführt, vorzugsweise organische Materialien, die auch einen Feuchtegehalt aufweisen können, oder nasse Stoffe enthaltend organisches Material, besonders bevorzugt Klärschlamm. Dem Feuerraum ist vorteilhafterweise ein Anfahr- und Stützbrenner zugeordnet, der mit Brennstoffen wie Erdgas, Diesel, Leichtöl versorgt wird. Da die Verbrennung des Hauptbrennstoffes vorteilhafterweise selbstgängig erfolgt, ist der Anfahr- und Stützbrenner in der Regel außer Betrieb.

Für die Verbrennungsanlage gemäß der vorliegenden Erfindung ist prinzipiell jede Art der Feuerung geeignet, wie Wirbelschichtfeuerung, Festbettfeuerung, Etagenfeuerung, Zykloidfeuerung, Rostfeuerung, Schmelzofen und Drehrohrofen. Besonders bevorzugt ist eine Wirbelschichtfeuerung, wobei im Warmhaltebetrieb vorzugsweise eine Temperatur von mindestens 350°C, besonders bevorzugt von mindestens 400°C im Wirbelbett aufrecht erhalten werden soll bzw. beim Neustart vorliegen soll.

In einer bevorzugten Ausführungsform enthält die Verbrennungsanlage gemäß der vorliegenden Erfindung weiterhin einen ersten Wärmetauscher, der eingerichtet ist, in einem Betriebszustand, in dem die Verbrennung des Brennstoffes im Feuerraum stattfindet, mindestens von einem Teil des Rauchgasstroms durchströmt zu werden und einen Teil der Wärmeenergie des Rauchgasstroms zur weiteren Nutzung abzuführen. Die weitere Nutzung kann beispielsweise die Erzeugung von Strom, das Heizen von Räumen und insbesondere die Nutzung der Wärme zur Trocknung des Brennstoffes sein, vorzugsweise von organischem Material, insbesondere von organischem Material mit einem Trockensubstanzgehalt von weniger als 45 Gew.-%, oder von nassen Stoffen enthaltend organisches Material, besonders bevorzugt Klärschlamm.

Die erfindungsgemäße Verbrennungsanlage enthaltend einen thermischen Speicher ist für alle Brennstoffe geeignet, für die ein diskontinuierlichen Betrieb, d.h. eine Fahrweise beispielsweise einschließlich einer Wochenendabschaltung sinnvoll ist. Diese Brennstoffe können Biomassen, Produktionsreststoffe (z.B. biomasseartige Brennstoffe aus der Holzverarbeitung), aufbereitete Abfälle, landwirtschaftliche Reststoffe, oder Biomassen aus der Landschaftspflege sein. Sinnvoll ist ein diskontinuierlicher Betrieb dann, wenn die Anlagengröße eher klein ist und kostenbedingt z.B. am Wochenende nicht betrieben werden soll.

Da alle festen Brennstoffe in der Regel auch einen Wassergehalt haben (außer sie kommen direkt aus einem Produktionsschritt, der mit hohen Temperaturen arbeitet) ist auch bei diesen Brennstoffen eine Vortrocknung oftmals sinnvoll. Im Falle von anderen Brennstoffen als Klärschlamm bleibt in der Regel noch ein Wärmeüberschuss übrig so, dass neben einer möglichen Trocknung des eingesetzten Brennstoffes auch noch Energie für andere Verwendungen zur Verfügung steht. Je nach Wassergehalt und erforderlicher Trocknung verschieben sich die Energieströme zur Vortrocknung, zum thermischen Speicher oder zur sonstigen Nutzung.

Beim Einsatz von Klärschlamm entfällt jedoch typischerweise die Energie für die sonstige Nutzung, da die meiste Energie für die Vortrocknung und ein kleiner Anteil für die Speicherung verwendet wird. Bei z.B. Biomassen mit höherem Heizwert und geringerer Feuchte bleibt ggf. ein Energiestrom übrig, der anderweitig genutzt werden kann.

Als Wärmetauscher und darin verwendete Wärmeträgermedien sind prinzipiell alle bekannten Wärmetauscher und Wärmeträgermedien geeignet, was sich maßgeblich nach der gewünschten Nutzung der Wärmeenergie richtet, beispielsweise Wasserdampf, Dampf, Warmwasser, Thermo-Öl oder auch Luft.

Insbesondere zur Verbrennung von organischen Materialen, bevorzugt von organischem Material mit einem Trockensubstanzgehalt von weniger als 45 Gew.-%, **oder** von Klärschlamm und anderen nassen Stoffen enthaltend organisches Material, ist in einer bevorzugten Ausführungsform vorgesehen, dass die Verbrennungsanlage weiterhin einen Trockner zur Trocknung des Brennstoffes und einen ersten Wärmetauscher enthält, durch den ein Teil des Rauchgasstroms geleitet wird, und wobei der erste Wärmetauscher eingerichtet ist, in einem Betriebszustand, in dem die Verbrennung des Brennstoffes im Feuerraum stattfindet, einen Teil der Wärmeenergie des Rauchgasstroms in den Trockner zu überführen.

In einer weiteren bevorzugten Ausführungsform enthält die Verbrennungsanlage einen Luftvorwärmer, der eingerichtet ist, in einem Betriebszustand, in dem die Verbrennung des Brennstoffes im Feuerraum stattfindet, mindestens von einem Teil des Rauchgasstroms durchströmt zu werden, zur Vorwärmung der in den Feuerraum geführten Verbrennungsluft mittels eines Teils der Wärmeenergie des Rauchgasstroms, vorzugsweise des Rauchgasstroms, der bereits durch den ersten Wärmetauscher und/oder den thermischen Speicher geführt wurde.

In einer bevorzugten Ausführungsform ist der thermische Speicher eingerichtet, in einem Betriebszustand, in dem die Verbrennung des Brennstoffes im Feuerraum stattfindet, von mindestens einem Teil des Rauchgases direkt durchströmt zu werden.

In einer weiteren bevorzugten Ausführungsform ist die Verbrennungsanlage eingerichtet, in einem Betriebszustand, in dem die Verbrennung im Feuerraum abgeschaltet ist, ein gasförmiges Wärmeträgermedium, besonders bevorzugt Luft, durch den thermischen Speicher und anschließend durch den Feuerraum zu führen, zur Überführung von Wärmeenergie aus dem thermischen Speicher in den Feuerraum.

Für das schnelle Wiederanfahren einer Verbrennungsanlage ist im Wesentlichen die Feuerung führend. Um möglichst geringe Mengen an Hilfsbrennstoff einzusetzen, liegt es im Zentrum des Interesses, nach dem Stopp der Verbrennung die Temperatur des Feuerraums auf einem gewissen Niveau zu halten oder vor dem Wiederanfahren auf ein gewisses Niveau zu bringen. Daher ist die Verbrennungsanlage im Warmhaltebetrieb vorzugsweise so geschaltet, dass zumindest der Feuerraum mit thermischer Energie aus dem thermischen Speicher versorgt wird, der während des Regelbetriebs (Betriebszustand, in dem die Verbrennung des Brennstoffes im Feuerraum stattfindet) aufgeladen wurde.

Ähnliches gilt für den Wärmetauscher, mit dem im Regelbetrieb Wärme für die Trocknung des Brennstoffes aus dem Rauchgasstrom gewonnen und in den Trockner abgeführt wird. Daher wird der Wärmetauscher vorzugsweise ebenfalls mit Wärmeenergie aus dem thermischen Speicher versorgt, während die Feuerung abgeschaltet ist. Daher ist in einer bevorzugten Ausführungsform die Verbrennungsanlage weiterhin eingerichtet, in einem Betriebszustand, in dem die Verbrennung im Feuerraum abgeschaltet ist, das im thermischen Speicher aufgewärmte gasförmige Wärmeträgermedium zuerst durch den Feuerraum und anschließend durch den ersten Wärmetauscher und optional, anschließend durch den Luftvorwärmer und weiterhin optional, anschließend durch die Rauchgasreinigungsanlage zu führen, zur Überführung von Wärmeenergie in den ersten Wärmetauscher und ggf. in den Luftvorwärmer und ggf. in die Rauchgasreinigungsanlage.

Als Rauchgasreinigungsanlage sind grundsätzlich alle zur Rauchgasreinigung bekannten Anlagen geeignet. Die Art und das Konzept der Rauchgasreinigungsanlage richten sich nach der Reinigungsaufgabe, die maßgeblich durch den Brennstoff und die entsprechenden geltenden Vorschriften vorgegeben wird.

In einer bevorzugten Ausführungsform wird ein Teilstrom des gereinigten Rauchgases zur Regelung der Verbrennungstemperatur und zur Reduzierung der NO_{X}-Entstehung (Low-NO_{X}-Betrieb) in den Feuerraum geführt (Rauchgasrezirkulation).

In einer weiteren bevorzugten Ausführungsform enthält die Verbrennungsanlage weiterhin einen zweiten Wärmetauscher, der eingerichtet ist, in einem Betriebszustand, in dem die Verbrennung des Brennstoffes im Feuerraum stattfindet, von mindestens einem Teil des Rauchgasstroms durchströmt zu werden und einen Teil der Wärmeenergie des Rauchgasstroms mittels eines Wärmeträgermediums in den thermischen Speicher zu überführen.

Der Vorteil der indirekten Beladung, d.h. Aufheizung des thermischen Speichers mittels eines Wärmeträgermediums, das in einem Wärmetauscher (Wärmeübertrager) durch den Rauchgasstrom aufgeheizt wird, ist, dass das Speichermaterial keinen direkten Kontakt mit dem Rauchgas hat. Somit werden Rauchgasbestandteile wie Staub oder chemische Substanzen vom Speichermaterial fern gehalten.

In einer bevorzugten Ausführungsform ist der zweite Wärmetauscher bezogen auf den Rauchgasstrom parallel zum ersten Wärmetauscher oder in Reihe mit dem ersten Wärmetauscher geschaltet. Ist der zweite Wärmetauscher in Reihe mit dem ersten Wärmetauscher geschaltet, dann wird der zweite Wärmetauscher bezogen auf den Rauchgasstrom bevorzugt davor, d.h. stromaufwärts des ersten Wärmetauschers, angeordnet. Weiterhin können in Reihe geschaltete Wärmetauscher auch in einer Baueinheit angeordnet sind.

In einer weiteren bevorzugten Ausführungsform ist das zwischen dem zweiten Wärmetauscher und dem thermischen Speicher geführte Wärmeträgermedium gasförmig. In einem Betriebszustand, in dem die Verbrennung des Brennstoffes im Feuerraum stattfindet, überträgt hierbei das indirekt im zweiten Wärmetauscher aufgeheizte Wärmeträgermedium die Wärmeenergie durch direkten Kontakt an das Speichermaterial des thermischen Speichers. Nachdem das Wärmeträgermedium den thermischen Speicher durchlaufen hat wird es vorzugsweise zur erneuten Aufheizung in den zweiten Wärmetauscher zurückgeführt.

In einer bevorzugten Ausführungsform ist die Verbrennungsanlage eingerichtet, in einem Betriebszustand, in dem die Verbrennung im Feuerraum abgeschaltet ist, Wärmeenergie mittels eines gasförmigen Wärmeträgermediums, vorzugsweise Luft, aus dem thermischen Speicher in den Feuerraum zu führen.

In einer bevorzugten Ausführungsform ist die Verbrennungsanlage eingerichtet, in einem Betriebszustand, in dem die Verbrennung im Feuerraum abgeschaltet ist, das gasförmige Wärmeträgermedium, nachdem es durch den Feuerraum geführt wurde, weiterhin durch den ersten Wärmetauscher und optional, anschließend durch den Luftvorwärmer und weiterhin optional, anschließend durch die Rauchgasreinigungsanlage zu führen, zur Überführung von Wärmeenergie in den ersten Wärmetauscher und ggf. in den Luftvorwärmer und ggf. in die Rauchgasreinigungsanlage.

In einer weiteren bevorzugten Ausführungsform ist das zwischen dem zweiten Wärmetauscher und dem thermischen Speicher geführte Wärmeträgermedium flüssig. In einem Betriebszustand, in dem die Verbrennung des Brennstoffes im Feuerraum stattfindet, überträgt hierbei das indirekt im zweiten Wärmetauscher aufgeheizte Wärmeträgermedium die Wärmeenergie indirekt mittels Wärmeübertrager an das Speichermaterial des thermischen Speichers. Nachdem das Wärmeträgermedium die Wärme an den thermischen Speicher abgegeben hat, wird es vorzugsweise zur erneuten Aufheizung in den zweiten Wärmetauscher zurückgeführt.

In einer bevorzugten Ausführungsform ist das zwischen dem zweiten Wärmetauscher und dem thermischen Speicher geführte Wärmeträgermedium flüssig und die Verbrennungsanlage eingerichtet, in einem Betriebszustand, in dem die Verbrennung im Feuerraum abgeschaltet ist, Wärmeenergie mittels eines gasförmigen Wärmeträgermediums, vorzugsweise Luft, aus dem thermischen Speicher in den Feuerraum zu führen und optional weiterhin durch den ersten Wärmetauscher und optional, anschließend durch den Luftvorwärmer und weiterhin optional, anschließend durch die Rauchgasreinigungsanlage zu führen.

In einer alternativen bevorzugten Ausführungsform ist das zwischen dem zweiten Wärmetauscher und dem thermischen Speicher geführte Wärmeträgermedium flüssig und die Verbrennungsanlage eingerichtet, in einem Betriebszustand, in dem die Verbrennung im Feuerraum abgeschaltet ist, Wärmeenergie mittels des flüssigen Wärmeträgermediums aus dem thermischen Speicher in den zweiten Wärmetauscher zu überführen und Wärmeenergie mittels eines gasförmigen Wärmeträgermediums, vorzugsweise Luft, aus dem zweiten Wärmetauscher in den Feuerraum zu führen und optional weiterhin durch den ersten Wärmetauscher und optional, anschließend durch den Luftvorwärmer und weiterhin optional, anschließend durch die Rauchgasreinigungsanlage zu führen.

In einer alternativen bevorzugten Ausführungsform sind das zwischen dem zweiten Wärmetauscher und dem thermischen Speicher geführte Wärmeträgermedium flüssig oder gasförmig, sowie das Speichermaterial flüssig. In einem Betriebszustand, in dem die Verbrennung des Brennstoffes im Feuerraum stattfindet, überträgt hierbei das indirekt im zweiten Wärmetauscher aufgeheizte Wärmeträgermedium die Wärmeenergie indirekt mittels Wärmeübertrager an das flüssige Speichermaterial des thermischen Speichers. Nachdem das Wärmeträgermedium die Wärme an den thermischen Speicher abgegeben hat, wird es vorzugsweise zur erneuten Aufheizung in den zweiten Wärmetauscher zurückgeführt. In einer bevorzugten Ausführungsform ist die Verbrennungsanlage eingerichtet, in einem Betriebszustand, in dem die Verbrennung im Feuerraum abgeschaltet ist, Wärmeenergie mittels des gasförmigen oder flüssigen Wärmeträgermediums aus dem thermischen Speicher in den zweiten Wärmetauscher zu überführen und Wärmeenergie mittels eines gasförmigen Wärmeträgermediums, vorzugsweise Luft, aus dem zweiten Wärmetauscher in den Feuerraum zu führen und optional weiterhin durch den ersten Wärmetauscher und optional, anschließend durch den Luftvorwärmer und weiterhin optional, anschließend durch die Rauchgasreinigungsanlage zu führen.

Für den thermischen Speicher sind grundsätzlich alle bekannten Speichertypen und Speichermedien denkbar, die für eine kontinuierliche Beladung im regulären Betrieb von Wärmeträgermedien durchströmt werden können. Für die indirekte Aufheizung durch die Wärmeenergie des Rauchgasstroms sind ebenfalls entsprechende Speichertypen und Speichermedien bekannt und hier verwendbar. So ist in einer weiteren bevorzugten Ausführungsform der thermische Speicher ausgewählt aus der Gruppe bestehend aus Festbett-Partikelspeicher, Speicher enthaltend profilierte Bleche, Speicher enthaltend keramische Speichermittel, Speicher enthaltend Speichermittel ausgewählt aus der Gruppe bestehend aus Salz, Druckwasser, Öle.

Die vorliegende Erfindung stellt weiterhin ein Verfahren bereit zur Verbrennung von flüssigen, festen oder gasförmigen Brennstoffen, in der oben beschriebenen Verbrennungsanlage, wobei in einem Betriebszustand, in dem die Verbrennung des Brennstoffes im Feuerraum stattfindet, mindestens ein Teil der Wärmeenergie des aus dem Feuerraum geführten Rauchgases in den thermischen Speicher zugeführt wird und der thermische Speicher die Wärmeenergie speichert, wobei erfindungsgemäß in einem Betriebszustand, in dem die Verbrennung im Feuerraum abgeschaltet ist, Wärmeenergie aus dem thermischen Speicher in den Feuerraum überführt wird, wobei die Wärmeenergie mittels eines gasförmigen Wärmeträgermediums, vorzugsweise Luft, in den Feuerraum eingeführt wird.

In einem bevorzugten Verfahren wird in einem Betriebszustand, in dem die Verbrennung im Feuerraum abgeschaltet ist, Wärmeenergie über mindestens 1,0 Stunden, vorzugsweise mindestens 2,0 Stunden, weiter bevorzugt mindestens 3,0 Stunden, noch weiter bevorzugt mindestens 5,0 Stunden, besonders bevorzugt mindestens 10,0 Stunden, ganz besonders bevorzugt mindestens 20,0 Stunden, am meisten bevorzugt mindestens 50,0 Stunden aus dem thermischen Speicher in den Feuerraum und ggf. in weitere Komponenten der Anlage überführt.

In einem bevorzugten Verfahren wird, wenn ein Zeitintervall, in dem die Verbrennung im Feuerraum abgeschaltet ist, 8,0 bis 100,0 Stunden beträgt, vorzugsweise 20,0 bis 80,0 Stunden, bevor die Verbrennung wieder startet, Wärmeenergie über das gesamte Zeitintervall, in dem die Verbrennung im Feuerraum abgeschaltet ist, oder einen Teil davon aus dem thermischen Speicher in den Feuerraum überführt.

In einem besonders bevorzugten Verfahren wird, wenn ein Zeitintervall, in dem die Verbrennung im Feuerraum abgeschaltet ist, 8,0 bis 100,0 Stunden beträgt, vorzugsweise 20,0 bis 80,0 Stunden, bevor die Verbrennung wieder startet, Wärmeenergie über einen Teil des Zeitintervalls aus dem thermischen Speicher in den Feuerraum überführt, um die Temperatur im Feuerraum zu erhöhen, damit zum Zeitpunkt des Neustarts der Verbrennung eine höhere Temperatur, vorzugsweise eine um mindestens 100°C höhere Temperatur, weiter bevorzugt eine um mindestens 200°C höhere Temperatur, noch weiter bevorzugt eine um mindestens 300°C höhere Temperatur im Feuerraum erreicht wird, als wenn dem Feuerraum diese Wärmeenergie nicht zugeführt würde.

In einem bevorzugten Verfahren werden als Brennstoff organisches Material, einschließlich solchem mit Feuchtegehalt, oder nasse Stoffe enthaltend organisches Material, vorzugsweise Klärschlamm verwendet. Dieses Material, insbesondere der Klärschlamm wird wie oben bereits beschrieben in bevorzugter Weise mittels der aus dem Rauchgasstrom abgeführten Wärmeenergie so weit getrocknet, dass er im Feuerraum verbrannt werden kann. In einem weiteren bevorzugten Verfahren werden daher nasse Stoffe enthaltend organisches Material, vorzugsweise Klärschlamm, oder organisches Material mit einem Trockensubstanzgehalt von weniger als 45 Gew.-% als Brennstoff verwendet, wobei der Brennstoff in einem Trockner getrocknet wird und in einem Betriebszustand, in dem die Verbrennung des Brennstoffes im Feuerraum stattfindet, ein Teil der Wärmeenergie des Rauchgasstroms über einen ersten Wärmetauscher in den Trockner überführt, und in einem Betriebszustand, in dem die Verbrennung im Feuerraum abgeschaltet ist, Wärmeenergie aus dem thermischen Speicher zusätzlich in den ersten Wärmetauscher und vorzugsweise über diesen in den Trockner geführt.

In einem weiteren bevorzugten Verfahren wird Wärmeenergie durch den ersten Wärmetauscher und optional, anschließend durch den Luftvorwärmer und weiterhin optional, anschließend durch die Rauchgasreinigungsanlage geführt, zur Überführung von Wärmeenergie in den ersten Wärmetauscher und ggf. in den Luftvorwärmer und ggf. in die Rauchgasreinigungsanlage.

Die vorliegende Erfindung stellt weiterhin eine Verwendung eines thermischen Speichers und ein Verfahren zum Warmhalten und/oder Aufwärmen eines Feuerraums einer Verbrennungsanlage zur Verbrennung von flüssigen, festen oder gasförmigen Brennstoffen, wobei in einem Betriebszustand, in dem die Verbrennung des Brennstoffes im Feuerraum stattfindet, mindestens ein Teil der Wärmeenergie des aus dem Feuerraum geführten Rauchgases in den thermischen Speicher zugeführt wird und der thermische Speicher die Wärmeenergie speichert, wobei in einem Betriebszustand, in dem die Verbrennung im Feuerraum abgeschaltet ist, Wärmeenergie aus dem thermischen Speicher in den Feuerraum überführt wird, wobei die Wärmeenergie mittels eines gasförmigen Wärmeträgermediums, vorzugsweise Luft, in den Feuerraum eingeführt wird.

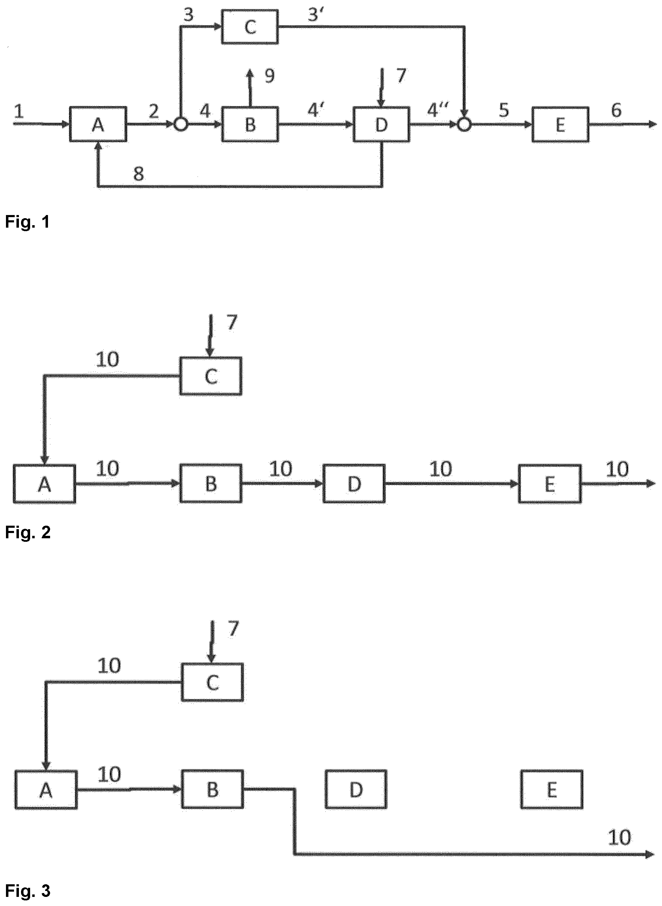

In den folgenden Figuren wird die vorliegende Erfindung näher beschrieben:
**In** **Figur 1** wird der reguläre Betrieb der erfindungsgemäßen Verbrennungsanlage dargestellt, wobei der thermische Speicher C beladen wird. In einer Feuerung A werden Brennstoff 1 und Verbrennungsluft 8 zur Durchführung der Verbrennung zusammengebracht. Das durch die Verbrennung im Feuerraum A entstehende Rauchgas 2 verlässt die Feuerung A. Dabei wird ein Teil 3 des Rauchgasstroms 2 umgeleitet und durch den thermischen Speicher C geführt, der sich so während des regulären Betriebs der Verbrennungsanlage aufheizt. Das Rauchgas 3 verlässt den thermischen Speicher C abgekühlt 3'.

Der nicht zum thermischen Speicher C geleitete Teil 4 des Rauchgases 2 wird durch einen Wärmetauscher B geführt, in dem Wärmeenergie zur weiteren Nutzung an ein Wärmeträgermedium 9 übertragen wird. Diese weitere Nutzung kann eine Trocknung des Brennstoffes sein (in der Figur nicht gezeigt). Das teilweise abgekühlte Rauchgas 4', das aus dem Wärmetauscher B kommt, wird in einen Luftvorwärmer D geführt, in dem die zur Verbrennung benötigte Luft 8 durch Aufheizung von Umgebungsluft 7 vorgewärmt wird.

Das weiter abgekühlte Rauchgas 4" wird mit dem aus dem thermischen Speicher C austretenden und abgekühlten Rauchgasteilstrom 3' zusammengeführt und gemeinsam in die nachfolgende Rauchgasreinigung E geführt. Dabei ist unter anderem darauf zu achten, dass der aus 3' und 4" zusammengeführte Rauchgasstrom 5 die erforderlichen Eintrittstemperaturen der Rauchgasreinigung E nicht unterschreitet. Ebenso sind Wärmetauscher B und Luftvorwärmer D energetisch so aufeinander abzustimmen, dass eine ausreichende Vorwärmung der Verbrennungsluft 7/8 für die Feuerung A stattfindet.

Gemäß der in Figur 1 gezeigten Schaltung wird ein Teilstrom 3 des aus der Verbrennung austretenden Rauchgases 2 "direkt" durch den Wärmespeicher C geführt, so dass eine direkte Wärmeübertragung an das Speichermaterial stattfindet.

In **Figur 2** wird der Warmhaltebetrieb oder das Aufwärmen beim Wiederanfahren der Verbrennungsanlage dargestellt, wobei der thermische Speicher C entladen wird, zum Warmhalten der Feuerung A, des Wärmetauschers B, des Luftvorwärmers D und der Rauchgasreinigung E. Wird die Anlage in den Warmhaltebetrieb überführt, wird die Feuerung im Feuerraum A eingestellt und Umgebungsluft 7 durch den thermischen Speicher C geführt und die Luft 7 in diesem aufgeheizt. Diese aufgeheizte Luft 10 wird zur Warmhaltung der Komponenten Feuerung A, Wärmetauscher B, Luftvorwärmer D und Rauchgasreinigung E durch diese geführt.

In **Figur 3** wird der Warmhaltebetrieb der Verbrennungsanlage dargestellt, wobei der thermische Speicher C entladen wird, zum Warmhalten der Feuerung A und des Wärmetauschers B. Für das schnelle Wiederanfahren der Verbrennungsanlage unter Einsatz möglichst geringer Mengen an Hilfsbrennstoff ist im Wesentlichen die Feuerung A und ggf. auch der Wärmetauscher B entscheidend. Daher wird im Warmhaltebetrieb Umgebungsluft 7 durch den thermischen Speicher C geführt und in diesem aufgeheizt. Diese aufgeheizte Luft 10 wird zur Warmhaltung der Komponenten Feuerung A und vorteilhafterweise der Komponente Wärmetauscher B durch diese geführt. In bevorzugter Weise wird in dieser Schaltungsvariante auf die Warmhaltung von Luftvorwärmer D und Rauchgasreinigung E verzichtet und die mittlerweile abgekühlte Luft 10 unmittelbar an die Umgebung abgegeben.

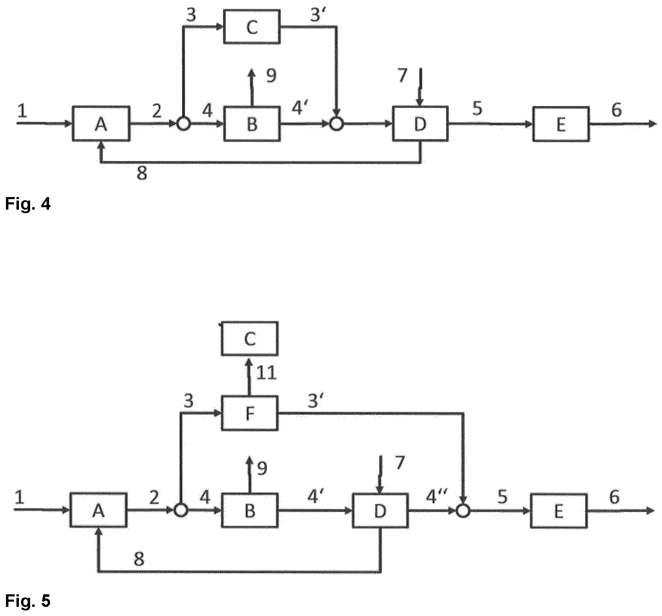

In **Figur 4** wird eine Abwandlung der in Figur 1 beschriebenen Schaltung darstellt. Hier wird das aus dem thermischen Speicher C kommende Rauchgas vor dem Luftvorwärmer eingemischt. Der nicht zum thermischen Speicher C geleitete Teil 4 des Rauchgases 2 wird durch einen Wärmetauscher B geführt, wo die fühlbare Wärme zur weiteren Nutzung an ein Wärmeträgermedium 9 übertragen wird. Das teilweise abgekühlte Rauchgas 4' wird mit dem aus dem thermischen Speicher C austretenden und abgekühlten Rauchgasteilstrom 3' zusammengeführt und gemeinsam (3' + 4') in den nachfolgenden Luftvorwärmer D geführt, in dem die zur Verbrennung benötigte Luft 8 durch Aufheizung von Umgebungsluft 7 vorgewärmt wird. Der aus dem Luftvorwärmer D austretende abgekühlte Rauchgasstrom 5 wird in die nachfolgende Rauchgasreinigung E geführt.

Gemäß der in Figur 4 gezeigten Schaltung wird ein Teilstrom 3 des aus der Verbrennung austretenden Rauchgases 2 "direkt" durch den Wärmespeicher C geführt, so dass eine direkte Wärmeübertragung an das Speichermaterial stattfindet.

**In** **Figur 5** wird eine Schaltung gezeigt, wonach die Wärme des Rauchgasstroms indirekt zum Wärmespeicher geführt wird. Eine weitere mögliche Variante ist es die im Rauchgasteilstrom 3 enthaltene Wärme mittels eines Wärmeübertragers F (zweiter Wärmetauscher) an ein Wärmeträgermedium 11 zu übertragen. Dieses Wärmeträgermedium 11 wiederum transferiert die Wärme an den thermischen Speicher C.

Die Wärmeübertragung mittels 11 kann durch vier grundsätzliche Varianten erfolgen:
1. Das Wärmeträgermedium 11, das indirekt im Wärmeübertrager F aufgeheizt wurde, überträgt die Wärme durch direkten Kontakt an das Speichermaterial des thermischen Speichers C.
2. Das Wärmeträgermedium 11, das indirekt im Wärmeübertrager F aufgeheizt wurde, überträgt die Wärme durch direkten Kontakt an das Speichermaterial des thermischen Speichers C und wird anschließend zur erneuten Aufheizung in den Wärmetauscher F zurückgeführt.
3. Das Wärmeträgermedium 11, das indirekt im Wärmeübertrager F aufgeheizt wurde, überträgt die Wärme indirekt, also mittels Wärmeübertrager an das Speichermaterial des thermischen Speichers C.
4. Das Wärmeträgermedium 11, das indirekt im Wärmeübertrager (F) aufgeheizt wurde, überträgt die Wärme indirekt, also mittels Wärmeübertrager an das Speichermaterial des thermischen Speichers C und wird anschließend zur erneuten Aufheizung in den Wärmetauscher F zurückgeführt.

Grundsätzlich stehen für die Einkopplung des Rauchgasteilstroms 3' in den Hauptrauchgasweg wieder die in Figur 1 und Figur 4 beschriebenen Varianten zur Verfügung: Einkopplung nach dem Luftvorwärmer (D) (hier in Figur 5 dargestellt) oder Einkopplung vor dem Luftvorwärmer (nicht in Figur 5 dargestellt, analog zu Figur 4). Vorteile dieser in Figur 5 dargestellten Möglichkeit den thermischen Speicher C thermisch zu "beladen" ist, dass das Speichermaterial keinen direkten Kontakt mit dem Rauchgas hat. Somit werden Rauchgasbestandteile wie z.B. Staub, oder chemische Substanzen, die je nach Brennstoff 1 unterschiedlich sein können, vom Speichermaterial fern gehalten.

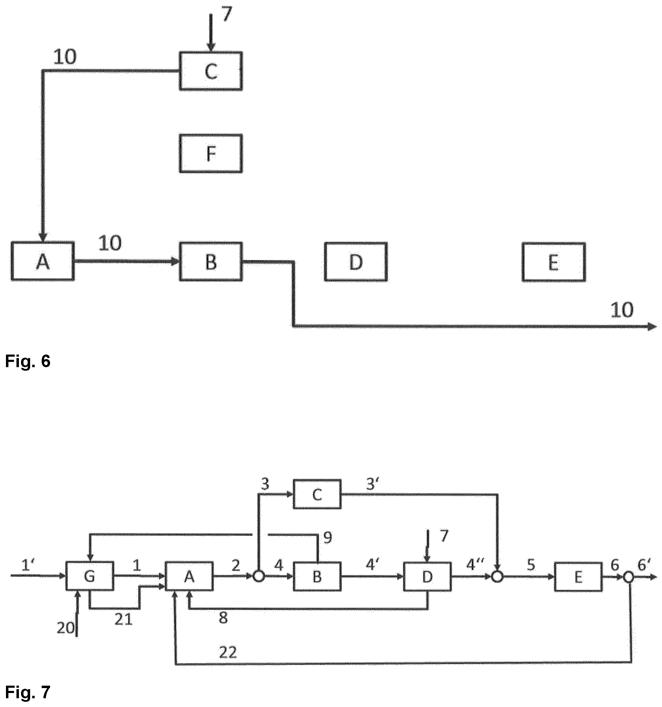

In **Figur 6** wird der Warmhaltebetrieb der in Figur 5 dargestellten Anlage gezeigt. Da für das schnelle Wiederanfahren unter Einsatz möglichst geringer Mengen Hilfsbrennstoff im Wesentlichen die Feuerung A und der erste Wärmetauscher B führend sind, kann wie in Fig. 3 dargestellt auch im Warmhaltebetrieb die Umgebungsluft 7 im thermischen Speicher C aufgeheizt und zur Warmhaltung durch die Komponenten Feuerung A und ersten Wärmetauscher B geführt werden. Vorteilhafterweise wird in dieser Schaltungsvariante (analog zu Figur 3) auf die Warmhaltung von Luftvorwärmer D und Rauchgasreinigung E verzichtet und die mittlerweile abgekühlte Luft 10 unmittelbar an die Umgebung abgegeben. Es kann aber auch in Analogie zu Figur 2 sowohl Luftvorwärmer D als auch Rauchgasreinigung E zur Warmhaltung durchströmt werden. Diese Durchströmungsvarianten des Hauptrauchgasweges können auch zeitlich unterschiedlich durchgeführt werden. So kann die Warmhaltung gemäß Figur 2 am Anfang des Warmhaltevorgangs durchgeführt werden. Kurz vor Wiederinbetriebnahme der Anlage kann es vorteilhaft sein, die Durchströmung auch von Luftvorwärmer D und Rauchgasreinigung E durchzuführen (analog Figur 3 und Figur 6).

Die **Figur 7** zeigt die Anlage mit Vor-Trocknung des Brennstoffes und direkter Aufheizung des thermischen Speichers. In Figur 7 ist eine beispielhafte Anwendung für die Verbrennung von feuchten wasserhaltigen Brennstoffen 1' dargestellt. In einem Trockner G wird unter Zufuhr von Wärme 9 der Brennstoff teilgetrocknet 1, bevor er in die Feuerung A gegeben wird. Hier werden Brennstoffe vorgesehen, bei denen eine Vortrocknung sinnvoll ist, wie z.B. bei Klärschlamm, feuchten Ersatzbrennstoffen, Abfällen, oder verschiedenen Biomassen. Je nach Art des Trockners G kann z.B. ein zusätzlicher Luftstrom 20 eingesetzt werden, der mit Hilfe der Wärme 9 aufgeheizt wird, um den Brennstoff 1' zumindest teilweise zu trocknen. Hier können Trockner nach Stand der Technik eingesetzt werden. Je nach Wahl des Trocknertypen kann auch auf den Luftstrom 20 verzichtet werden. Das bei dem Trocknungsprozess ausgetriebene Wasser liegt typischerweise dampfförmig vor, sogenannter Brüden. Je nach Trocknertyp besteht der Strom 21 aus Abluft und Brüden oder auch nur aus Brüden. Abluft und Brüden oder nur Brüden 21 wird vorteilhafterweise mit in den Verbrennungsprozess gegeben, so dass auf eine separate Reinigung der Abluft und Brüden oder nur Brüden 21 verzichtet werden kann. Nach dem Stand der Technik kann der während der Trocknung anfallende Wasserdampf (Brüden) auch ganz oder teilweise kondensiert werden, so dass Strom 21 nur ein Teil des Brüdens oder ein Teil des Brüdens mit Luft sein kann.

Zusätzlich kann ein Teil des Rauchgases 6 nach der Rauchgasreinigung E rezirkuliert (siehe 22) werden und in die Feuerung A geführt werden. Dies ist je nach Auswahl des Feuerungssystems vorteilhaft zur Temperaturregelung innerhalb der Feuerung und kann zur Senkung der im Verbrennungsprozess entstehenden Stickoxide eingesetzt werden.

Die Beladung des Speichers für das in Figur 7 dargestellte Beispiel erfolgt analog der Vorgehensweise in Figur 1 mittels eines direkten Wärmetauschs zwischen dem Teilstrom Rauchgas 3 und dem Speichermaterial im thermischen Speicher C.

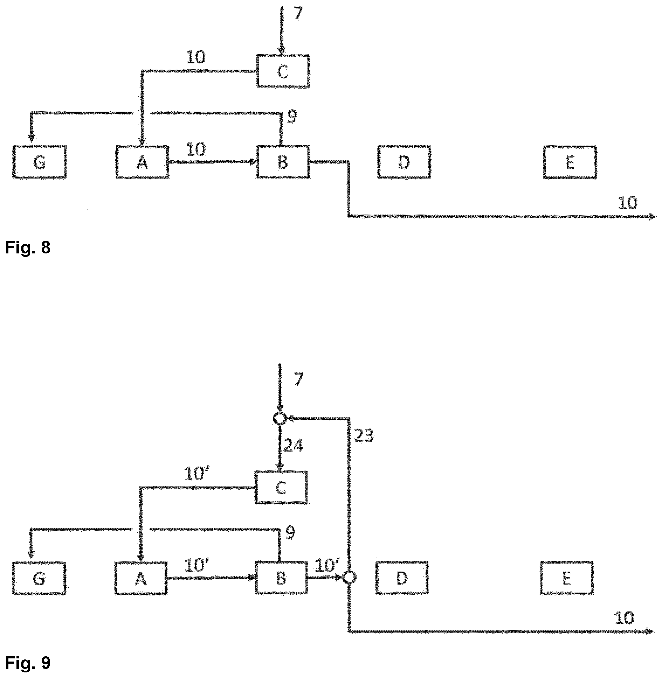

**Figur 8** zeigt prinzipiell die schon in Figur 2 beschriebene Warmhaltung der in Figur 7 gezeigten Vorrichtung. Im Warmhaltebetriebt wird Luft 7 durch den thermischen Speicher C geleitet und aufgeheizt und wird anschließend durch die Feuerung A und den ersten Wärmetauscher B geleitet wird. Um zum Beispiel ab einem bestimmten Zeitpunkt des Warmhaltebetriebs auch den Trockner G vorzuwärmen, kann das Wärmeträgermedium 9 mit dem Warmhaltestrom 10 erwärmt werden, um so Wärme zum Trockner G zu übertragen. Hierbei kann das Wärmeträgermedium 9 auch im Kreis gefahren werden.

**Figur 9** zeigt prinzipiell die schon in Figur 8 beschriebene Warmhaltung. Zur Verbesserung der Effizienz wird der Strom 10' rezirkuliert 23. Zur Temperaturregelung kann ein Teil durch frische Luft 7 ersetzt werden. Es kann alternativ auch zumindest zeitweise und je nach Temperaturniveau im Kreis gefahren werden, ohne das ein Strom 10 an die Umgebung abgegeben werden muss. Hierbei kann das Wärmeträgermedium 9 auch im Kreis gefahren werden. Auch hier in Figur 9 ist die Warmhaltung des Trockners G eingeschlossen (analog Figur 8)

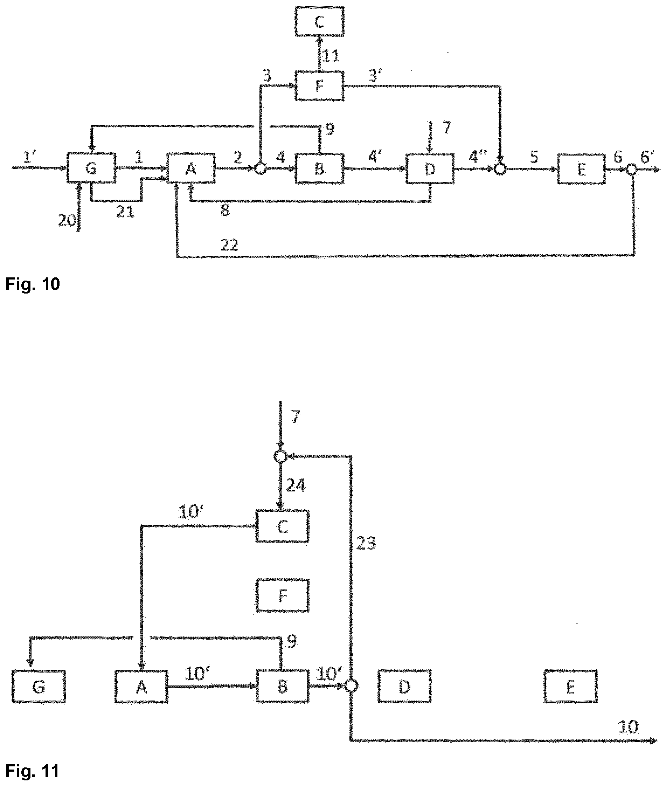

Die **Figur 10** zeigt die Anlage mit Vor-Trocknung des Brennstoffes und indirekter Aufheizung des thermischen Speichers. In Figur 10 ist eine beispielhaft Anwendung für die Verbrennung von feuchten wasserhaltigen Brennstoffen 1' dargestellt (analog Figur 7). In einem Trockner G wird unter Zufuhr von Wärme 9 der Brennstoff teilgetrocknet 1, bevor er in die Feuerung A gegeben wird. Hier werden Brennstoffe vorgesehen, bei denen eine Vortrocknung sinnvoll ist, wie z.B. bei Klärschlamm, feuchten Ersatzbrennstoffen, Abfällen, oder verschiedenen Biomassen. Im Unterschied zu Figur 7 findet hier die Aufheizung des Wärmespeichers indirekt statt, d.h. die Wärme des Rauchgasteilstroms 3 wird über einen Wärmeübertrager F an ein Wärmeträgermedium 11 an den Speicher übertragen. Die Wärmeübertragung vom Medium 11 an den Speicher kann sowohl durch direkten Kontakt des Medium mit dem Speichermaterial erfolgen oder durch indirekte Wärmeübertagung, wobei dann ein Wärmeübertrager im Speicher die Wärme des Mediums an das Speichermaterial überträgt. Als Wärmeträgermedium können alle Medien für direkte Wärmeübertragung oder für indirekte Wärmeübertragung nach Stand der Technik verwendet werden.

**Figur 11** zeigt prinzipiell den schon in Figur 8 dargestellten Warmhaltebetrieb der Anlage aus Figur 10. Zur Verbesserung der Effizienz wird der Strom 10' rezirkuliert 23. Zur Temperaturregelung kann ein Teil durch frische Luft 7 ersetzt werden. Es kann alternativ auch zumindest zeitweise und je nach Temperaturniveau im Kreis gefahren werden, ohne das ein Strom 10 an die Umgebung abgegeben werden muss.

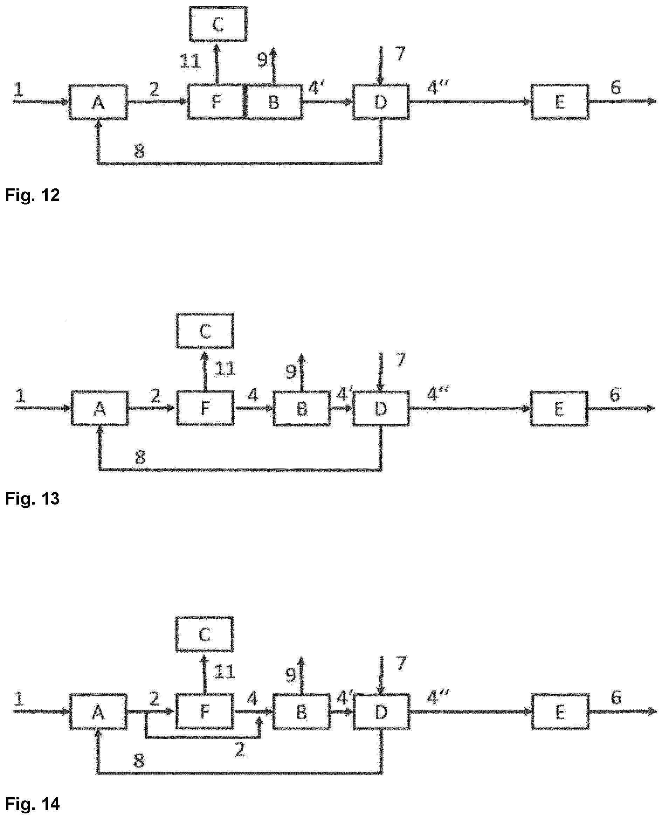

**Figur 12** zeigt die Beladung des thermischen Speichers durch indirekte Wärmeübertragung, wobei der Wärmeübertrager F sich im Hauptrauchgasstrom befindet. In der Figur 5 wurde bereits die prinzipielle Vorgehensweise zur indirekten Beladung des Speichers C durch ein Wärmeträgermedium 11 beschrieben, welche zuvor mit einem Teilstrom 3 des Hauptrauchgasstroms 2 erwärmt wurde. Im Gegensatz zur Figur 5 wird in der hier in Figur 12 dargestellten Variante die Wärme zu Beladung des thermischen Speichers aus dem Hauptrauchgasstrom 2, der die Feuerung A verlässt, mittels eines Wärmetauschers F entnommen. Dabei wird das Wärmeträgermedium 11 aufgeheizt, welches die Wärme an den thermischen Speicher C überträgt. Die Übertragung der Wärme vom Medium 11 an den thermischen Speicher C kann wiederum direkt, durch direkten Kontakt mit dem Speichermaterial erfolgen, oder durch indirekte Übertragung an das Speichermaterial erfolgen. Die verbleibende Wärme des Rauchgastroms 2 wird im ersten Wärmeübertrager B an das Wärmeträgermedium 9 übertragen, welches für eine beliebige Nutzung und/oder z.B. für eine Vortrocknung des Brennstoffs (wie in Figur 10 dargestellt) verwendet werden kann.

Die Wärmeübertrager F und B sind in Figur 12 in einer baulichen Einheit angeordnet und können darin beliebig angeordnet sein, d.h. die Übertragerflächen können untereinander versetzt, in Reihe oder parallel geschaltet oder in Kombinationen daraus angeordnet sein. Die Wärmeträgermedien 9 und 11 können gleich oder unterschiedlich sein, wobei als Wärmeträgermedium alle Medien für direkte Wärmeübertragung oder für indirekte Wärmeübertragung nach Stand der Technik verwendet werden können.

**Figur 13** beschreibt grundsätzlich das gleiche Funktionsprinzip wie in Figur 12 dargestellt. Allerdings sind in Figur 13 die Wärmeübertrager F und B wieder im Hauptgasstrom in Reihe geschaltet.

**Figur 14** beschreibt eine Verfeinerung der in Figur 13 gezeigten Anlage, insofern dass die Wärmeübertrager F und B wieder im Hauptgasstrom in Reihe geschaltet sind, aber der Rauchgasstrom 2 aus regelungstechnischen Gründen ganz (oder teilweise, hier nicht dargestellt) um den Wärmeübertrager F gefahren werden kann. Dies ist zum Beispiel dann erforderlich, wenn der thermische Speicher C vollständig beladen ist und keine weitere Wärme an den thermischen Speicher übertragen werden soll. Dann wird mittels Umfahrung des Wärmeübertragers F die Wärmeübertragung an das Wärmeträgermedium 11 unterbrochen und die gesamte mit dem Hauptrauchgasstrom 2 geführte Wärme steht dem ersten Wärmeübertrager B zur Verfügung. In der Figur 14 ist eine weitere Variante nicht dargestellt, wonach auch nur ein Teil des Rauchgastroms 2 vor Wärmeübertrager F ausgekoppelt und vor Wärmeübertrager B wieder eingekoppelt wird.

### Bezugszeichenliste

- A: Feuerraum/Feuerung
- B: erster Wärmetauscher/Wärmeübertrager
- C: thermischer Speicher
- D: Luftvorwärmer
- E: Rauchgasreinigung
- F: zweiter Wärmetauscher/Wärmeübertrager
- G: Trockner

- 1: Brennstoff/Einsatzstoff
- 1': Brennstoff/Einsatzstoff mit höherem Feuchte-/Wassergehalt als 1
- 2: Rauchgas aus der thermischen Umwandlung
- 3, 3': Teilströme des Rauchgases
- 4, 4', 4": Teilströme des Rauchgases
- 5: gekühltes Rauchgas
- 6, 6': Teilstrom des Rauchgases
- 7: Umgebungsluft
- 8: vorgewärmte Luft
- 9: Wärmeträgermedium
- 10, 10': im thermischen Speicher aufgeheizte Luft
- 11: Wärmeträgermedium

- 20: Luft
- 21: Abluft und Brüden oder Brüden oder Anteile der Brüden mit Luft
- 22: rezirkuliertes Rauchgas
- 23: (Teil-)Strom rezirkulierte Luft
- 24: Luft und rezirkulierte Luft

## Patentansprüche

1. Eine Verbrennungsanlage zur Verbrennung von flüssigen, festen oder gasförmigen Brennstoffen, enthaltend einen Feuerraum (A) mit Brennstoffzufuhr (1) und Verbrennungsluftzufuhr (8), einen Rauchgasweg (2, 3, 3', 4, 4', 4", 5, 6, 6') und einen thermischen Speicher (C), wobei die Verbrennungsanlage eingerichtet ist in einem Betriebszustand, in dem die Verbrennung des Brennstoffes im Feuerraum (A) stattfindet, mindestens einen Teil der Wärmeenergie des aus dem Feuerraum (A) geführten Rauchgases (2, 3) in den thermischen Speicher (C) zu führen, und der thermische Speicher (C) eingerichtet ist, die Wärmeenergie zu speichern, **dadurch gekennzeichnet, dass** die Verbrennungsanlage weiterhin eingerichtet ist, in einem Betriebszustand, in dem die Verbrennung im Feuerraum (A) abgeschaltet ist, Wärmeenergie aus dem thermischen Speicher (C) in den Feuerraum (A) zu überführen, wobei der Eintritt der Wärmeenergie in den Feuerraum (A) mittels eines gasförmigen Wärmeträgermediums (10, 10'), vorzugsweise Luft, erfolgt.

2. Die Verbrennungsanlage gemäß Anspruch 1, weiterhin enthaltend einen ersten Wärmetauscher (B), der eingerichtet ist, in einem Betriebszustand, in dem die Verbrennung des Brennstoffes im Feuerraum (A) stattfindet, mindestens von einem Teil des Rauchgasstroms (4) durchströmt zu werden und einen Teil der Wärmeenergie des Rauchgasstroms zur weiteren Nutzung abzuführen (9), vorzugsweise zur Trocknung (G) des Brennstoffes (1'), bevorzugt von organischem Material, insbesondere von organischem Material mit einem Trockensubstanzgehalt von weniger als 45 Gew.-%, oder von nassen Stoffen enthaltend organisches Material, besonders bevorzugt Klärschlamm.

3. Die Verbrennungsanlage gemäß Anspruch 1 oder 2, weiterhin enthaltend einen Luftvorwärmer (D), der eingerichtet ist, in einem Betriebszustand, in dem die Verbrennung des Brennstoffes im Feuerraum (A) stattfindet, mindestens von einem Teil des Rauchgasstroms (4') durchströmt zu werden, zur Vorwärmung der in den Feuerraum (A) geführten Verbrennungsluft (8) mittels eines Teils der Wärmeenergie des Rauchgasstroms, vorzugsweise des Rauchgasstroms (4', 3'), der bereits durch einen ersten Wärmetauscher (B) und/oder den thermischen Speicher (C) geführt wurde.

4. Die Verbrennungsanlage gemäß irgendeinem der Ansprüche 1 bis 3, wobei der thermische Speicher (C) eingerichtet ist, in einem Betriebszustand, in dem die Verbrennung des Brennstoffes im Feuerraum (A) stattfindet, von mindestens einem Teil des Rauchgases (3) direkt durchströmt zu werden.

5. Die Verbrennungsanlage gemäß irgendeinem der Ansprüche 1 bis 4, wobei die Verbrennungsanlage eingerichtet ist, in einem Betriebszustand, in dem die Verbrennung im Feuerraum (A) abgeschaltet ist, ein gasförmiges Wärmeträgermedium (7) durch den thermischen Speicher (C) und anschließend durch den Feuerraum (A) zu führen, zur Überführung von Wärmeenergie aus dem thermischen Speicher (C) in den Feuerraum (A).

6. Die Verbrennungsanlage gemäß zumindest den Ansprüchen 2 und 5, wobei die Verbrennungsanlage weiterhin eingerichtet ist, in einem Betriebszustand, in dem die Verbrennung im Feuerraum (A) abgeschaltet ist, das im thermischen Speicher (C) aufgewärmte gasförmige Wärmeträgermedium (10, 10') durch den ersten Wärmetauscher (B) und optional, zuzüglich gemäß Anspruch 3, anschließend durch den Luftvorwärmer (D) und weiterhin optional, anschließend durch eine Rauchgasreinigungsanlage (E) zu führen, zur Überführung von Wärmeenergie in den ersten Wärmetauscher (B) und ggf. in den Luftvorwärmer (D) und ggf. in die Rauchgasreinigungsanlage (E).

7. Die Verbrennungsanlage gemäß irgendeinem der Ansprüche 1 bis 3, weiterhin enthaltend einen zweiten Wärmetauscher (F), der eingerichtet ist, in einem Betriebszustand, in dem die Verbrennung des Brennstoffes im Feuerraum (A) stattfindet, von mindestens einem Teil des Rauchgasstroms (3) durchströmt zu werden und einen Teil der Wärmeenergie des Rauchgasstroms mittels eines Wärmeträgermediums (11) in den thermischen Speicher (C) zu überführen.

8. Die Verbrennungsanlage gemäß gemäß zumindest den Ansprüchen 2 und 7, wobei der zweite Wärmetauscher (F) bezogen auf den Rauchgasstrom parallel zum ersten Wärmetauscher (B) oder in Reihe mit dem ersten Wärmetauscher (B), bevorzugt stromaufwärts des ersten Wärmetauschers (B), geschaltet ist.

9. Die Verbrennungsanlage gemäß Anspruch 7 oder 8, wobei das zwischen dem zweiten Wärmetauscher (F) und dem thermischen Speicher (C) geführte Wärmeträgermedium (11) gasförmig ist.

10. Die Verbrennungsanlage gemäß irgendeinem der Ansprüche 2 bis 9, wobei die Verbrennungsanlage eingerichtet ist, in einem Betriebszustand, in dem die Verbrennung im Feuerraum (A) abgeschaltet ist, das gasförmige Wärmeträgermedium (10, 10'), nachdem es durch den Feuerraum (A) geführt wurde, weiterhin durch den ersten Wärmetauscher (B) und optional, zuzüglich gemäß Anspr. 3, anschließend durch den Luftvorwärmer (D) und weiterhin optional, anschließend durch eine Rauchgasreinigungsanlage (E) zu führen, zur Überführung von Wärmeenergie in den ersten Wärmetauscher (B) und ggf. in den Luftvorwärmer (D) und ggf. in die Rauchgasreinigungsanlage (E).

11. Die Verbrennungsanlage gemäß irgendeinem der Ansprüche 1 bis 10, wobei der thermische Speicher (C) ausgewählt ist aus der Gruppe bestehend aus Festbett-Partikelspeicher, Speicher enthaltend profilierte Bleche, Speicher enthaltend keramische Speichermittel.

12. Die Verbrennungsanlage gemäß Anspruch 7 oder 8, wobei das zwischen dem zweiten Wärmetauscher (F) und dem thermischen Speicher (C) geführte Wärmeträgermedium (11) flüssig ist, und die Verbrennungsanlage eingerichtet ist, in einem Betriebszustand, in dem die Verbrennung des Brennstoffes im Feuerraum (A) stattfindet, die Wärmeenergie des indirekt im zweiten Wärmetauscher (F) aufgeheizten Wärmeträgermediums (11) an das Speichermaterial des thermischen Speichers (C) zu übertragen.

13. Die Verbrennungsanlage gemäß Anspruch 7 oder 8, wobei das zwischen dem zweiten Wärmetauscher (F) und dem thermischen Speicher (C) geführte Wärmeträgermedium (11) flüssig oder gasförmig, sowie das Speichermaterial des thermischen Speichers (C) flüssig ist, und die Verbrennungsanlage eingerichtet ist, in einem Betriebszustand, in dem die Verbrennung des Brennstoffes im Feuerraum (A) stattfindet, die Wärmeenergie des indirekt im zweiten Wärmetauscher (F) aufgeheizten Wärmeträgermediums (11) an das flüssige Speichermaterial des thermischen Speichers (C) zu übertragen.

14. Die Verbrennungsanlage gemäß irgendeinem der Ansprüche 1 bis 8 und 12 bis 13, wobei der thermische Speicher (C) Speichermedien enthält ausgewählt aus der Gruppe bestehend aus Salz, Druckwasser, Öle.

15. Ein Verfahren zur Verbrennung von flüssigen, festen oder gasförmigen Brennstoffen, in einer Verbrennungsanlage gemäß irgendeinem der Ansprüche 1 bis 14, wobei in einem Betriebszustand, in dem die Verbrennung des Brennstoffes im Feuerraum (A) stattfindet, mindestens ein Teil der Wärmeenergie des aus dem Feuerraum (A) geführten Rauchgases (2, 3) in den thermischen Speicher (C) zugeführt wird und der thermische Speicher (C) die Wärmeenergie speichert, **dadurch gekennzeichnet, dass** in einem Betriebszustand, in dem die Verbrennung im Feuerraum (A) abgeschaltet ist, Wärmeenergie aus dem thermischen Speicher (C) in den Feuerraum (A) überführt wird, wobei die Wärmeenergie mittels eines gasförmigen Wärmeträgermediums (10, 10'), vorzugsweise Luft, in den Feuerraum (A) eingeführt wird.

16. Das Verfahren gemäß Anspruch 15, wobei, wenn ein Zeitintervall, in dem die Verbrennung im Feuerraum (A) abgeschaltet ist, 8,0 bis 100,0 Stunden beträgt, bevor die Verbrennung wieder startet, Wärmeenergie über das gesamte Zeitintervall, in dem die Verbrennung im Feuerraum (A) abgeschaltet ist, oder einen Teil davon, aus dem thermischen Speicher (C) in den Feuerraum (A) überführt wird.

17. Das Verfahren gemäß Anspruch 15, wobei, wenn ein Zeitintervall, in dem die Verbrennung im Feuerraum (A) abgeschaltet ist, 8,0 bis 100,0 Stunden beträgt, bevor die Verbrennung wieder startet, Wärmeenergie über einen Teil des Zeitintervalls aus dem thermischen Speicher (C) in den Feuerraum (A) überführt wird, um die Temperatur im Feuerraum (A) zu erhöhen, damit zum Zeitpunkt des Neustarts der Verbrennung eine höhere Temperatur, vorzugsweise eine um mindestens 100°C höhere Temperatur, weiter bevorzugt eine um mindestens 200°C höhere Temperatur, noch weiter bevorzugt eine um mindestens 300°C höhere Temperatur im Feuerraum (A) erreicht wird, als wenn dem Feuerraum (A) diese Wärmeenergie nicht zugeführt würde.

18. Das Verfahren gemäß irgendeinem der Ansprüche 15 bis 17, wobei organisches, insbesondere organisches Material mit einem Trockensubstanzgehalt von weniger als 45 Gew.-%, oder nasse Stoffe enthaltend organisches Material, vorzugsweise Klärschlamm, als Brennstoff verwendet werden, wobei der Brennstoff (1') in einem Trockner (G) getrocknet wird und in einem Betriebszustand, in dem die Verbrennung des Brennstoffes im Feuerraum (A) stattfindet, einen Teil der Wärmeenergie des Rauchgasstroms (2, 4) über einen ersten Wärmetauscher (B) in den Trockner (G) überführt (9) wird, und in einem Betriebszustand, in dem die Verbrennung im Feuerraum (A) abgeschaltet ist, Wärmeenergie aus dem thermischen Speicher (C) zusätzlich in den ersten Wärmetauscher (B) und vorzugsweise über diesen in den Trockner (G) geführt wird.

## Claims

1. A combustion installation for combusting liquid, solid or gaseous fuels, comprising a combustion chamber (A) with a fuel feed (1) and a combustion air feed (8), a flue gas path (2, 3, 3', 4, 4', 4", 5, 6, 6') and a heat accumulator (C), wherein the combustion installation is configured in a way that, in an operating state in which fuel combustion inside the combustion chamber (A) is taking place, to conduct at least part of the thermal energy of the flue gas (2, 3) conducted out of the combustion chamber (A) into the heat accumulator (C), and the heat accumulator (C) is configured to store the thermal energy, **characterized in that** said combustion installation is further configured, in an operating state in which combustion inside the combustion chamber (A) is turned off, to transfer thermal energy from the heat accumulator (C) into the combustion chamber (A), wherein the entry of the thermal energy into the combustion chamber (A) occurs by way of a gaseous heat carrier medium (10, 10'), preferably air.

2. The combustion installation according to claim 1, further comprising a first heat exchanger (B) that is configured in a way, in an operating state in which fuel combustion inside the combustion chamber (A) is taking place, that at least a part of the flue gas stream (4) is streaming through it and a part of the thermal energy of the flue gas stream is being diverted (9) for further use, preferably for drying (G) of the fuel (1'), preferably of organic material, particularly of organic material having a dry matter content of less than 45 wt-%, or of wet substances containing organic material, particularly preferred sewage sludge.

3. The combustion installation according to claim 1 or 2, further comprising an air preheater (D) that is configured in a way, in an operating state in which fuel combustion inside the combustion chamber (A) is taking place, that at least a part of the flue gas stream (4') is flowing through it for preheating the combustion air (8) fed to the combustion chamber (A) by way of a part of the thermal energy of the flue gas stream, preferably of the flue gas stream (4', 3') that has already been conducted through a first heat exchanger (B) and/or the heat accumulator (C).

4. The combustion installation according to any one of claims 1 to 3, wherein the heat accumulator (C) is configured in a way, in an operating state in which fuel combustion inside the combustion chamber (A) is taking place, that at least a part of the flue gas (3) is streaming directly through it.

5. The combustion installation according to any one of claims 1 to 4, wherein the combustion installation is configured, in an operating state in which combustion inside the combustion chamber (A) is turned off, to conduct a gaseous heat carrier medium (7) through the heat accumulator (C) and subsequently through the combustion chamber (A) for transferring thermal energy from the heat accumulator (C) into the combustion chamber (A).

6. The combustion installation according to at least claims 2 and 5, wherein the combustion installation, in an operating state in which combustion in the combustion chamber (A) is turned off, is further configured to conduct the gaseous heat carrier medium (10, 10'), heated up inside the heat accumulator (C), through the first heat exchanger (B) and optionally, in addition according to claim 3, subsequently through the air preheater (D) and, still optionally, subsequently through a flue gas purification unit (E), in order to transfer thermal energy into the first heat exchanger (B) and, if applicable, into the air preheater (D) and, if applicable, into the flue gas purification unit (E).

7. The combustion installation according to any one of claims 1 to 3, further comprising a second heat exchanger (F) that is configured in a way, in an operating state in which fuel combustion inside the combustion chamber (A) is taking place, that at least a part of the flue gas stream (3) is streaming through it, and a part of the thermal energy of the flue gas stream is transferred by way of a heat carrier medium (11) into the heat accumulator (C).

8. The combustion installation according to at least claims 2 and 7, wherein, with respect to the flue gas stream, the second heat exchanger (F) is connected in parallel to the first heat exchanger (B) or in series with the second heat exchanger (B), preferably upstream of the first heat exchanger (B).

9. The combustion installation according to claim 7 or 8, wherein the heat carrier medium (11) conducted between the second heat exchanger (F) and the heat accumulator (C) is gaseous.

10. The combustion installation according to any one of claims 2 to 9, wherein the combustion installation is configured, in an operating state in which combustion inside the combustion chamber (A) is turned off, to conduct the gaseous heat carrier medium (10, 10'), after it has been conducted through the combustion chamber (A), further through the first heat exchanger (B) and, optionally, in addition according to claim 3, subsequently through the air preheater (D) and, still optionally, subsequently through a flue gas purification unit (E), for transferring thermal energy into the first heat exchanger (B), and, if applicable, into the air preheater (D) and, if applicable, into the flue gas purification unit (E).

11. The combustion installation according to any one of claims 1 to 10, wherein the heat accumulator (C) is selected from the group consisting of fixed-bed particle accumulators, accumulators comprising profiled steel sheets, accumulators comprising ceramic storage media.

12. The combustion installation according to claim 7 or 8, wherein the heat carrier medium (11) conducted between the second heat exchanger (F) and the heat accumulator (C) is liquid, and the combustion installation is configured, in an operating state in which combustion of the fuel inside the combustion chamber (A) is taking place, to transfer the thermal energy of the heat carrier medium (11) heated indirectly inside the second heat exchanger (F) to the storage material of the heat accumulator (C).

13. The combustion installation according to claim 7 or 8, wherein the heat carrier medium (11) conducted between the second heat exchanger (F) and the heat accumulator (C) is liquid or gaseous and the storage material of the heat accumulator (C) is liquid, and the combustion installation is configured, in an operating state in which combustion of the fuel inside the combustion chamber (A) is taking place, to transfer the thermal energy of the heat carrier medium (11) heated indirectly inside the second heat exchanger (F) to the liquid storage material of the heat accumulator (C).

14. The combustion installation according to any one of claims 1 to 8 and 12 to 13, wherein the heat accumulator (C) comprises storage media selected from the group consisting of salt, pressurized water, oils.

15. A method for combusting liquid, solid or gaseous fuels in a combustion installation according to any one of claims 1 to 14, wherein, in an operating state in which combustion inside the combustion chamber (A) is taking place, at least a part of the thermal energy of the flue gas (2, 3) conducted out of the combustion chamber (A) is fed into the heat accumulator (C) and the heat accumulator (C) storing the thermal energy, **characterized in that,** in an operating state in which combustion inside the combustion chamber (A) is turned off, thermal energy is transferred from the thermal accumulator (C) into the combustion chamber (A), wherein the thermal energy is fed into the combustion chamber (A) by way of a gaseous carrier medium (10, 10'), preferably air.

16. The method according to claim 15, wherein, if a time interval during which combustion inside the combustion chamber (A) is turned off is 8.0 to 100.0 hours before combustion starts again, thermal energy is transferred from the heat accumulator (C) into the combustion chamber (A) throughout the entire time interval, or a part thereof, during which combustion inside the combustion chamber (A) is turned off.

17. The method according to claim 15, wherein, if a time interval during which combustion inside the combustion chamber (A) is turned off is 8.0 to 100.0 hours before combustion starts again, thermal energy is conducted from the heat accumulator (C) into the combustion chamber (A) during a part of the time interval in order to raise the temperature inside the combustion chamber (A), so that at the time when combustion starts again a higher temperature is reached inside the combustion chamber (A), preferably a temperature at least 100 °C higher, further preferred a temperature at least 200 °C higher, even further preferred a temperature at least 300 °C higher than if this thermal energy would not be fed into the combustion chamber (A).

18. The method according to any one of claims 15 to 17, wherein organic material, particularly organic material having a dry matter content of less than 45 wt-%, or wet substances containing organic matter, preferably sewage sludge, is used as a fuel, wherein the fuel (1') is dried in a dryer (G), and in an operating state in which combustion of fuel inside the combustion chamber (A) is taking place, a part of the thermal energy of the flue gas stream (2, 4) is transferred (9) via a first heat exchanger (B) into the dryer (G), and, in an operating state in which combustion inside the combustion chamber (A) is turned off, thermal energy from the heat accumulator (C) is additionally conducted into the first heat exchanger (B) and preferably via the same into the dryer (G).

## Revendications

1. Installation de combustion pour la combustion de combustibles liquides, solides ou gazeux, contenant une chambre de combustion (A) avec une alimentation en combustible (1) et une alimentation en air de combustion (8), une voie de fumées (2, 3, 3', 4, 4', 4", 5, 6, 6') et un accumulateur thermique (C), dans laquelle l'installation de combustion est conçue afin d'acheminer, dans un état de fonctionnement dans lequel la combustion du combustible a lieu dans la chambre de combustion (A), au moins une partie de l'énergie thermique des fumées (2, 3) acheminées hors de la chambre de combustion (A) dans l'accumulateur thermique (C), et l'accumulateur thermique (C) est conçu afin de stocker l'énergie thermique, **caractérisée en ce que** l'installation de combustion est en outre conçue afin de transférer, dans un état de fonctionnement dans lequel la combustion est arrêtée dans la chambre de combustion (A), de l'énergie thermique depuis l'accumulateur thermique (C) dans la chambre de combustion (A), dans laquelle l'entrée de l'énergie thermique dans la chambre de combustion (A) est effectuée au moyen d'un milieu caloporteur (10, 10') gazeux, de préférence de l'air.

2. Installation de combustion selon la revendication 1, contenant en outre un premier échangeur de chaleur (B) qui est conçu afin d'être traversé, dans un état de fonctionnement dans lequel la combustion du combustible a lieu dans la chambre de combustion (A), au moins par une partie du courant de fumées (4) et d'évacuer (9) une partie de l'énergie thermique du courant de fumées pour un autre usage, de préférence pour le séchage (G) du combustible (1'), de préférence de matière organique, en particulier de matière organique avec une teneur en substance sèche de moins de 45 % en poids, ou de substances humides contenant de la matière organique, le plus préférentiellement de la boue d'épuration.

3. Installation de combustion selon la revendication 1 ou 2, contenant en outre un préchauffeur d'air (D) qui est conçu afin d'être traversé, dans un état de fonctionnement dans lequel la combustion du combustible a lieu dans la chambre de combustion (A), au moins par une partie du courant de fumées (4') pour le préchauffage de l'air de combustion (8) acheminé dans la chambre de combustion (A) au moyen d'une partie de l'énergie thermique du courant de fumées, de préférence du courant de fumées (4', 3') qui a déjà été acheminé à travers un premier échangeur de chaleur (B) et/ou l'accumulateur thermique (C).

4. Installation de combustion selon l'une quelconque des revendications 1 à 3, dans laquelle l'accumulateur thermique (C) est conçu afin d'être traversé directement, dans un état de fonctionnement dans lequel la combustion du combustible a lieu dans la chambre de combustion (A), par au moins une partie des fumées (3).

5. Installation de combustion selon l'une quelconque des revendications 1 à 4, dans laquelle l'installation de combustion est conçue afin d'acheminer, dans un état de fonctionnement dans lequel la combustion est arrêtée dans la chambre de combustion (A), un milieu caloporteur (7) gazeux à travers l'accumulateur thermique (C) et ensuite à travers la chambre de combustion (A), pour le transfert d'énergie thermique depuis l'accumulateur thermique (C) dans la chambre de combustion (A).

6. Installation de combustion selon au moins les revendications 2 et 5, dans laquelle l'installation de combustion est en outre conçue afin d'acheminer, dans un état de fonctionnement dans lequel la combustion est arrêtée dans la chambre de combustion (A), le milieu caloporteur (10, 10') gazeux chauffé dans l'accumulateur thermique (C) à travers le premier échangeur de chaleur (B) et facultativement de plus selon la revendication 3, ensuite à travers le préchauffeur d'air (D) et en outre facultativement, ensuite à travers une installation d'épuration de fumées (E), pour le transfert d'énergie thermique dans le premier échangeur de chaleur (B) et éventuellement dans le préchauffeur d'air (D) et éventuellement dans l'installation d'épuration de fumées (E).

7. Installation de combustion selon l'une quelconque des revendications 1 à 3, contenant en outre un second échangeur de chaleur (F) qui est conçu afin d'être traversé, dans un état de fonctionnement dans lequel la combustion du combustible a lieu dans la chambre de combustion (A), par au moins une partie du courant de fumées (3) et de transférer une partie de l'énergie thermique du courant de fumées au moyen d'un milieu caloporteur (11) dans l'accumulateur thermique (C).

8. Installation de combustion selon au moins les revendications 2 et 7, dans laquelle le second échangeur de chaleur (F) est monté par rapport au courant de fumées parallèlement au premier échangeur de chaleur (B) ou en série avec le premier échangeur de chaleur (B), de préférence en amont du premier échangeur de chaleur (B).

9. Installation de combustion selon la revendication 7 ou 8, dans laquelle le milieu caloporteur (11) acheminé entre le second échangeur de chaleur (F) et l'accumulateur thermique (C) est gazeux.

10. Installation de combustion selon l'une quelconque des revendications 2 à 9, dans laquelle
l'installation de combustion est conçue afin d'acheminer, dans un état de fonctionnement dans lequel la combustion est arrêtée dans la chambre de combustion (A), le milieu caloporteur (10, 10') gazeux, après qu'il a été acheminé à travers la chambre de combustion (A), en outre à travers le premier échangeur de chaleur (B) et facultativement de plus selon la revendication 3, ensuite à travers le préchauffeur d'air (D) et en outre facultativement, ensuite à travers une installation d'épuration de fumées (E) pour le transfert d'énergie thermique dans le premier échangeur de chaleur (B) et éventuellement dans le préchauffeur d'air (D) et éventuellement dans l'installation d'épuration de fumées (E).

11. Installation de combustion selon l'une quelconque des revendications 1 à 10, dans laquelle l'accumulateur thermique (C) est sélectionné à partir du groupe constitué d'accumulateurs de particules à lit fixe, d'accumulateurs contenant des tôles profilées, d'accumulateurs contenant des moyens d'accumulation céramiques.

12. Installation de combustion selon la revendication 7 ou 8, dans laquelle le milieu caloporteur (11) acheminé entre le second échangeur de chaleur (F) et l'accumulateur thermique (C) est liquide, et l'installation de combustion est conçue afin de transmettre, dans un état de fonctionnement dans lequel la combustion du combustible a lieu dans la chambre de combustion (A), l'énergie thermique du milieu caloporteur (11) chauffé indirectement dans le second échangeur de chaleur (F) au matériau d'accumulation de l'accumulateur thermique (C).

13. Installation de combustion selon la revendication 7 ou 8, dans laquelle le milieu caloporteur (11) acheminé entre le second échangeur de chaleur (F) et l'accumulateur thermique (C) est liquide ou gazeux, ainsi que le matériau d'accumulation de l'accumulateur thermique (C) est liquide, et l'installation de combustion est conçue afin de transmettre, dans un état de fonctionnement dans lequel la combustion du combustible a lieu dans la chambre de combustion (A), l'énergie thermique du milieu caloporteur (11) chauffé indirectement dans le second échangeur de chaleur (F) au matériau d'accumulation liquide de l'accumulateur thermique (C).

14. Installation de combustion selon l'une quelconque des revendications 1 à 8 et 12 à 13, dans laquelle l'accumulateur thermique (C) contient des milieux d'accumulation sélectionnés à partir du groupe constitué du sel, de l'eau pressurisée, d'huiles.

15. Procédé de combustion de combustibles liquides, solides ou gazeux dans une installation de combustion selon l'une quelconque des revendications 1 à 14, dans lequel, dans un état de fonctionnement dans lequel la combustion du combustible a lieu dans la chambre de combustion (A), au moins une partie de l'énergie thermique des fumées (2, 3) acheminées hors de la chambre de combustion (A) est acheminée dans l'accumulateur thermique (C) et l'accumulateur thermique (C) stocke l'énergie thermique, **caractérisé en ce que**, dans un état de fonctionnement dans lequel la combustion est arrêtée dans la chambre de combustion (A), de l'énergie thermique est transférée depuis l'accumulateur thermique (C) dans la chambre de combustion (A), dans lequel l'énergie thermique est introduite dans la chambre de combustion (A) au moyen d'un milieu caloporteur (10, 10') gazeux, de préférence de l'air.

16. Procédé selon la revendication 15, dans lequel lorsqu'un intervalle de temps dans lequel la combustion est arrêtée dans la chambre de combustion (A) est compris entre 8,0 et 100,0 heures, de l'énergie thermique est transférée avant que la combustion ne redémarre dans l'intervalle de temps entier dans lequel la combustion est arrêtée dans la chambre de combustion (A), ou une partie de celle-ci, depuis l'accumulateur thermique (C) dans la chambre de combustion (A).

17. Procédé selon la revendication 15, dans lequel lorsqu'un intervalle de temps dans lequel la combustion est arrêtée dans la chambre de combustion (A) est compris entre 8,0 et 100,0 heures, de l'énergie thermique est transférée avant que la combustion ne redémarre dans une partie de l'intervalle de temps depuis l'accumulateur thermique (C) dans la chambre de combustion (A) pour augmenter la température dans la chambre de combustion (A), afin qu'au moment du redémarrage de la combustion, une température plus élevée, de préférence une température plus élevée d'au moins 100 °C, plus préférentiellement une température plus élevée d'au moins 200 °C, plus préférentiellement encore une température plus élevée d'au moins 300 °C soit atteinte dans la chambre de combustion, que si cette énergie thermique n'était pas acheminée vers la chambre de combustion (A).

18. Procédé selon l'une quelconque des revendications 15 à 17, dans lequel de la matière organique, en particulier organique avec une teneur en substance sèche de moins de 45 % en poids, ou des substances humides contenant de la matière organique, de préférence de la boue d'épuration, sont utilisées comme combustible, dans lequel le combustible (1') est séché dans un sécheur (G) et, dans un état de fonctionnement dans lequel la combustion du combustible a lieu dans la chambre de combustion (A), une partie de l'énergie thermique du courant de fumées (2, 4) est transférée dans le sécheur (G) par le biais d'un premier échangeur de chaleur (B) et, dans un état de fonctionnement dans lequel la combustion est arrêtée dans la chambre de combustion (A), de l'énergie thermique est acheminée depuis l'accumulateur thermique (C) en plus dans le premier échangeur de chaleur (B) et de préférence par le biais de celui-ci dans le sécheur (G).
